Europäisches Patentamt

(19) European Patent Office

Office européen des brevets

(11) Publication number: 0 169 621
A1

(12) **EUROPEAN PATENT APPLICATION**

(21) Application number: 85201212.9

(22) Date of filing: 18.07.85

(51) Int. Cl.⁴: A 01 N 25/10

(30) Priority: 20.07.84 NL 8402315

(43) Date of publication of application:
29.01.86 Bulletin 86/5

(84) Designated Contracting States:
AT BE CH DE FR GB IT LI LU NL SE

(71) Applicant: NEDERLANDSE CENTRALE ORGANISATIE
VOOR TOEGEPAST-NATUURWETENSCHAPPELIJK
ONDERZOEK
Juliana van Stolberglaan 148
NL-2595 CL The Hague(NL)

(72) Inventor: Greidanus, Pieter Jan
Kroeskarper 48
2661 KL Bergschenhoek(NL)

(74) Representative: van der Beek, George Frans et al,
Nederlandsch Octrooibureau Johan de Wittlaan 15 P.O.
Box 29720
NL-2502 LS 's-Gravenhage(NL)

(54) Insecticidal composition that releases selectively the active ingredients present therein.

(57) The present invention relates to insecticidal compositions, wherein at least one water soluble or water emulsifiable compound having an insecticidal action has been incorporated in a granule of HPA polymer alloy which in water at pH-levels of up to 7 does not swell substantially but swells indeed at pH levels of 8 or more, due to which the active ingredient(s) is (are) released selectively, respectively delayedly, respectively deferredly.

Insecticidal composition that releases selectively the active ingredients present therein.

The invention relates to an insecticidal composition that releases selectively the active ingredients present therein.

In Netherlands Patent Application 79.08799 polymer alloys are disclosed, that have a time-dependent respectively an environment-dependent absorption capacity for water and have been built up at least from:

- a component (a), being one or more high molecular (co)-polymers having anhydride groups and a molecular weight of more than $10.^4$ and

- a component (b), being one or more high molecular (co)-polymers having groups, that may interact with hydrogen atoms and have a molecular weight of $10.^4$,

in which alloy component (a) is wholly or partially protolysed and wherein the time dependent respectively environment dependent absorption capacity for water is controlled by

1) the specifically selected components (a) and (b),

2) the component (a) to component (b) ratio,

3) the protolysis of component (a),

4) the specific surface of the polymer alloy and

5) the possible other components, if any, present.

One or more high molecular copolymers of an olefinically unsaturated monomer and maleic acid, e.g. styrene- maleic anhydride-copolymer may be used as component (a), and polymers having ester groups, e.g. polyvinyl acetate, cellulose esters, polyacrylate and polymethacrylate may be used as component (b). Examples of proper cellulose esters are cellulose triacetate and cellulose acetobutyrate.

Below a defined temperature the above components (a) and (b) can be mixed in all ratios. Said phenomena is ascribed to the tiny interaction between polymer components (a) and (b). However, above the above-mentioned temperature, a separation or phase separation will occur. Said temperature Tc is a function of the molecular weights of the components and their mutual weight ratio, while moreover it has appeared, that the miscibility may be improved by increasing the physical interaction of the polymer components due to an increase of the degree of protolysis of component (a). By means of said protolysis carboxyl groups are

0169621

introduced into component (a) and said groups are capable to form hydrogen bridges between said two components.

Due to the specifically selected components (a) and (b), the ratio of component (a) to component (b), the degree of protolysis of component (a), the specific surface of the polymer alloy and, if any, other components present, a time dependent respectively environment dependent absorption capacity for water may be created.

By means of that type of alloys it is possible to prepare compositions having a pesticide activity, which have
- a delayed release
- a deferred release
- a selective release or
- a mixed release.

Pesticide compositions having a selective release are not dangerous for (useful) insects at contact, but are just active against leaf-eating insects, since the pesticide composition will swell only in the insect's stomach, wherein the pH is high and the pesticide will diffuse outside, due to which the insect will be killed.

It was found now, that the action of water soluble or water-emulsifiable insecticides, e.g. Permethrine, that at application on plant leaves are not only toxic for the present harmful insects, such as caterpillars, but also for simultaneously present desired insects, such as predators, may be made more effective and more selective by incorporating the insecticide in a granule of a HMPA polymer alloy, that in water at pH-levels of up to 7 does not swell substantially, but swells indeed at pH-levels of 8 or more.

It is not only the absorption of the polymer alloys involved that increases at increasing pH-levels, but also the absorption rate will increase. The nature of the material enables a relatively simple encapsulating and a controlled release of active compounds.

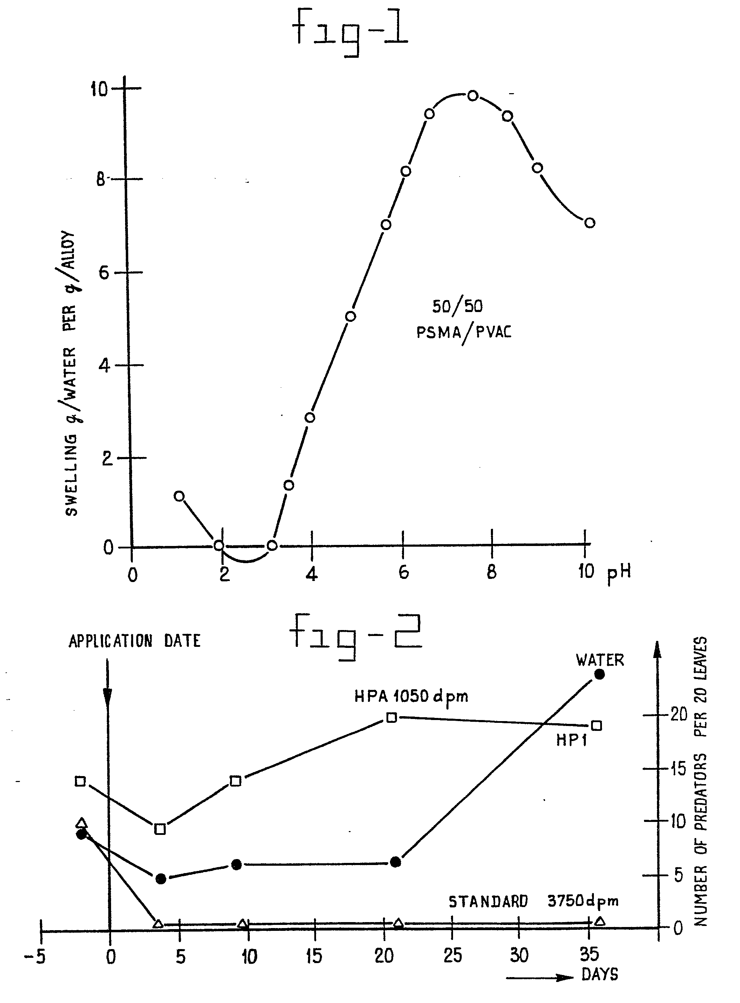

Generally HPA absorbs water in dependency of the pH according to the curve represented in figure 1, but a lot of variations is possible.

An active ingredient incorporated in a polymeric hydrogel releases only when said material has absorbed water. HPA that is present in the compositions according to the invention does not swell at the pH encountered normally at humid leaves, but swells at pH-levels that happen to occur at the stomach of caterpillars.

It has been found that HPA microgranules containing insecticide, should not be toxic for predators, but should kill caterpillars that nibble leaves.

Within the framework of research on integrated pest control the insecticides the predator Typhlodromus Pyri and the summer-fruit tortrix moth (Adoxophyes Orana) have been exposed to a 7 weight percent's solution of Permethrine in HPA microgranules. The HPA-alloy used absorbed water at pH=8 and higher and demonstrates neglible absorption at pH-levels of 7 and lower.

In an apple-tree orchard such a formulation has been sprayed as an aqueous suspension of 1050 ppm active ingredient, the usual concentration.

By error the concentration of active ingredient for the comparative test with the standard Permethrin has been three times higher: 3750 ppm active ingrendient.

Each formulation was applied on three groups of five apple-trees Golden Delicious 5 years of age. Per tree approximately 3 liter suspension has been used.

Effectivity has been tested by placing young caterpillars at one tree per group, after two days this was repeated at a second tree per group. After the application counts of caterpillars and of spinnings have been made.

Selectivity has been tested by counting numbers of Typhlodromus Pyri naturally present, one count before and four after the application.

The results obtained are represented on the following tables A - D, with graphical representation of the number of table D in figure 2.

Table A Number of caterpillars per 10 shoots per tree at two moments after application. N=3 Between brackets: percentage effectivity against check.

| formulation | 23/6 | 27/6 |
|---|---|---|
| HPA | 1.3 (58) | 3 (82%) |
| Standard | 0 (100%) | 0 (100%) |
| Water | 3.1 | 16.6 |

Table B Number of spinnings per 10 shoots per tree at two moments after application N=3 Between brackets: percentage effectivity against check.

| formulation | 23/6 | 27/6 |
|---|---|---|
| HPA | 9.0 (49%) | 13.0 (68%) |
| Standard | 1.3 (93%) | 5.3 (87%) |
| Water | 17.7 | 41.0 |

Table C Number of damaged shoots at two complete trees per group, N= 6 x 100 Between brackets effectivity against comparative test.

| formulation | | |
|---|---|---|
| HPA | 7.78 | (65.3%) |
| Standard | 0 | (100%) |
| Water | 22.4 | |

Table D Number of predators per 20 leaves before and four times after application of Golden Delicious apple-trees

| | before application | after application | | | |
|---|---|---|---|---|---|
| Date | 8/6 | 13/6 | 20/6 | 1/7 | 15/7 |
| Formulation | | | | | |
| HPA | 13.0 | 9.3 | 13.7 | 19.0 | 18.7 |
| Standard | 9.3 | 0.3 | 0 | 0.3 | 0.3 |
| Water | 9.3 | 5.3 | 6.7 | 6.7 | 23.3 |

Example I

A once application of Permethrine encapsulated in microgranules (granulating material from 30 weight percent polystyrene maleic anhydride and 70 weight percent polyvinyl acetate and 7 weight percent active compound) was compared with Ambush (25 weight percent Permethrine) and water, respectively as a positive and as a negative check, at application on trees of Lombarts Calville M9 4 years of age

The spraying was performed under favourable conditions, weak western wind and dry plants. Three trees per treatment in an entangled test schedule with two intervening untreated trees, got totally four liters of the formulation (about 1.3 liter per tree), applied by means of a back hand pump. The concentration of active material was in both Permethrine compositions 0.015 weight percent.

Before the treatment the number of apple predators (Typhlodromus Pyri) on 100 leaves of each tree, that had been collected by means of a Berlese funnel, was determined. On the very day before the treatment 75 caterpillars of summer-fruit tortrix moths (L2 and L3 phase) from a laboratory culture were applied on each tree.

By means of counts of predators on two moments, by means of Berlese-funnels, and looking for caterpillars per moment, the effect of the treatments was determined. A small test with Summer-fruit tortrix moth caterpillars, applied on treated seedlings was also performed to accompany the field test.

Result

In table E the average number of predators per treated tree, once before and twice - 8 and 16 days - after the treatment is represented:

Table E: Average number of predators per 100 leaves, determined to 3 x 100 leaves per treatment (minimum - maximum).

| Treatment Day | Permethrine in microgranules | Ambush | Water |
|---|---|---|---|
| - 6 | 22.0 (10-27) | 19.3 (5-36) | 18.6 (9-26) |
| 8 | 9.3 ( 1-24) | 14.6 (3-21) | 21.3 (5-47) |
| 16 | 22.6 (17-27) | 4.0 (3- 5) | 22.3 (15-35) |

Despite the big variation in the number of predators per tree, the disappearance of predators after application of Ambush is clear. In case encapsulated Permethrine is used such an effect is absent in the period of observance.

In table F the result of two counts of caterpillars is represented; at the first count, the second day, there was sought five minutes per tree by one person; at the second count on the 16th day two persons spent the same period per tree.

Table F: Average number of caterpillars of green summer-fruit tortrix moths (Adoxophyes orana) per tree and per 5 min. observation per person (minimum - maximum).

| Treatment Day | Permethrine in microgranules | Ambush | Water |
|---|---|---|---|
| 2 | 5.3 (3-7  ) | 0.0 (0-0  ) | 8.0 (7  -10  ) |
| 16 | 0.6 (0-1.5) | 0.5 (0-1.5) | 7.8 (6.5-10.5) |

0169621

From two days after the treatment with Ambush there were substantially no caterpillars to be found again; after 16 days it appeared that also the number of caterpillars on the trees treated with encapsulated Permethrine was reduced considerably.

Contemporary with the trees in said field test also some hoarded young apple seedlings were sprayed. One hour later three seedlings of each treatment were covered with 24 caterpillars of summer-fruit tortrix moths. Counts of the surviving caterpillars after treatment, on the 5th and on the 8th day are represented in table G.

Table G: Number of surviving caterpillars of summer-fruit tortrix moths (and percentage of mortality) after various periods of residence on treated apple seedlings (N = 24)

| Treatment Day | Permethrine in microgranules | Ambush | Water |
|---|---|---|---|
| 2 | 14 (62) | 0 | 18 (25) |
| 5 | 4 (83) | - | 12 (50) |
| 8 | 1 (96) | - | 11 (54) |

The mortality in the blank may be caused also by a prior treatment of the seedlings against the white fly. Nevertheless it appears from the figures that Permethrine in both compositions is killing; Ambush within a shorter period than encapsulated Permethrine.

From said results it appears:

- that encapsulated Permethrine is poisonous for caterpillars of (summer-fruit tortrix moths).

- that the action of said formulations is much more delayed than the action of free Permethrine in Ambush.

- that predators are less sensitive for the encapsulated Permethrine.

In small-scale field tests two compositions of Permethrine in polymer alloys were tested on their insecticide action with respect to the summer-fruit tortrix moth and the winter moth.

The investigation with respect to the selectivity was restricted to the investigation of side effects on predators.

The A- and B-formulations showed a very moderate respectively a moderate insecticide action on summer-fruit tortrix moths. The action of both formulations was excellent with respect to winter moth.

In a field test a disadvantageous effect on predators was not observed.

Example II

Test orchard, the variety Lombarts Calville (MM 106), planted early in 1978, plant distance 4 x 2,25 m.

Test schedule: Completely entangled block test in three repetitions.

Two trees per field, one buffer tree between the fields.

Treatments:

1) untreated (water)

2) Ambush: 0.015 weight percent Permethrine in the formulation used

3) A-formulation of Permethrine; 0.054 weight percent Permethrine in the formulation used; not sieved; pH 4 through 5,

4) B-formulation of Permethrine; 0.054 weight percent Permethrine in the formulation used; mixed with $CaCO_3$ (10:1); pH 7; lime layer on polymer granules.

Trumped-up infection with summer-fruit tortrix moths

Trees were infected with egg batches, that were coming out, derived from the laboratory culture of summer-fruit tortrix moths.

Said egg batches, (three per tree) were applied at the lower side of the leaf. Spraying: Seven days after coming out of the egg batches there was sprayed with a back pump till dripping down.

0.3-0.5 liter spraying liquid per tree was used.

Weather conditions on the spraying day, sunny, calm or from time to time a weak wind.

Observations: One month after application of the egg batches the webs, that were clearly observable, pruned and investigated in the laboratory. The caterpillars in said webs were in the L4-L5 phase.

Results: In table H the average number of caterpillars of summer-fruit tortrix moths of the fields are mentioned.

Table H Average number of caterpillars of summer-fruit tortrix moths of the fields

| treatment | conc. | average number of caterpillars | mortality with respect to untreated trees % |
|-----------|-------|-------------------------------|---------------------------------------------|
| untreated | - | 65,2 | - |
| Ambush | 0,015% | 0,3 | 99 |
| A | 0,054% | 22,2 | 66 |
| B | 0,054% | 16,0 | 75 |

Conclusions: The insecticide action of formulation B was much better than the action of formulation A. The action of both formulations was less good than the action of Ambush, but was nevertheless satisfying.

Example III

Location: Test orchard, variety Golden Delicious (M9), planted in 1969, plant distance 4 x 2,25 m.

Test schedule: Completely entangled block test in three repetitions. One field consisted of four trees per field. Two buffer trees between the fields.

Treatments:

1) untreated (water)

2) Ambush: 0.015 weight percent Permethrine in the formulation used

3) A-formulation of Permethrine; 0.054 weight percent Permethrine in the formulation used; not sieved; pH 4 through 5,

4) B-formulation of Permethrine; 0.054 weight percent Permethrine in the formulation used; blended with $CaCO_3$ (10:1); pH 7; lime layer on the polymer granules.

Trumped-up infection with winter moths:

Three trees per field were infected with winter moths. For that purpose willow shoots were used, that were attacked by winter moths and were fixed in the test trees.

Sprayings: There were two sprayings with a interval of 18 days there between. Per tree 1.5-2 liters of spraying liquid were used.

Observations:

Winter moth: Five days after spraying the caterpillars of winter moths, predominantly in the last larva phase, were beated from the trees infected with winter moths. The caterpillars were collected on a piece of floor cloth of 2 x 2 m. and counted.

Predators: One month after spraying samples of 100 leaves were gathered. The predators were counted under the binocular.

Results: In table J the number of caterpillars of winter moths was counted that were collected by means of the gathering method per tree and the percentual mortality with respect to the untreated ones was made up.

In table K the number of predators per field is stated.

0169621

Tabel J Average number of caterpillars of winter moths per tree and the percentual mortality with respect to the untreated tree

| treatment | concentration | average number of caterpillars per tree | % mortality in comp. with the untreated tree |
|---|---|---|---|
| untreated | - | 40,3 | - |
| Ambush | 0,015% | 0,3 | 99 |
| A | 0,054% | 0,6 | 98 |
| B | 0,054% | 0,2 | 99 |

Table K. Number of predators in samples of 100 leaves

| treatment | concentration | block | | | average |
|---|---|---|---|---|---|
| | | 1 | 2 | 3 | |
| untreated | 0,015% | 7 | 5 | 12 | 8,0 |
| Ambush | 0,015% | 9 | 1 | 1 | 3,7 |
| A | 0,054% | 13 | 8 | 7 | 9,3 |
| B | 0,054% | 9 | 8 | 8 | 8,3 |

Winter moth: The insecticide action of the A and B formulation of Permethrine is with respect to winter moth comparable with Ambush. The effect was very good, despite the fact that the spraying was carried out late.

There was sprayed when the caterpillars of winter moths were already in the last or last but one larva-phase.

Claims....

## CLAIMS

1. Insecticidal composition that releases selectively the active compounds present therein, characterized in that at least one water soluble or water emulsifiable compound having an insecticidal action has been incorporated in a granule of HPA polymer alloy which in water at pH-levels of up to 7 does not swell substantially but swells indeed at pH levels of 8 or more.

2. Insecticidal composition according to claim 1, characterized in that the compound having the insecticide action is Permethrine.

3. Insecticidal composition according to claim 1 or 2 characterized in that the HPA polymer alloy contains 30 weight percent polystyrene maleic anhydride and 70 weight percent polyvinyl acetate.

* * * * *

fig-1

fig-2

0169621

# EUROPEAN SEARCH REPORT

Application number

EP 85 20 1212

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | GB-A-2 038 847 (NEDERLANDSE ORGANISATIE VOOR TOEGEPAST NATUURWETENSCHAPPELIJK ONDERZOEK) * Page 4, lines 13-15,36-38; page 5, lines 14-16; page 9, example 13 * & NL - A - 79 08 799 (Cat. D) | 1-3 | A 01 N 25/10 |
| | ----- | | |
| | | | **TECHNICAL FIELDS SEARCHED (Int. Cl.4)** |
| | | | A 01 N |

The present search report has been drawn up for all claims

| Place of search | Date of completion of the search | Examiner |
|---|---|---|
| THE HAGUE | 17-10-1985 | DECORTE D. |